# EUROPEAN PATENT APPLICATION

(11) **EP 0 749 027 A1**
(43) Date of publication of application: **18.12.1996**
(21) Application number: 96108848.1
(22) Date of filing: 03.06.1996
(51) Int. Cl.: G02C 5/22

(54) **Eyeglasses with ameliorated hinges of the temples**

(30) Priority: 12.06.1995 IT PN950025 U; 09.05.1996 IT PN960020 U
(71) Applicant: LUIGI S.A., 1528 Luxembourg (LU)
(72) Inventor: Giusti, Dino, 31010 Godega S. Urbano, Treviso (IT)
(74) Representative: Giugni, Valter

(57) **Abstract**

Eyeglasses, having integrated elastic means to permit the temples to be pivoted with respect to the frame and to be elastically spread out beyond the open position, also have a pair of supports symmetrically secured to the frame at the pivoting locations of the temples. The integrated elastic means are simple elastic elements, each of which is apt to be inserted into one of said supports through separate links between a couple of pins and a corresponding couple of seats on the support itself. The axis of the pins and of the corresponding seats are parallel, so there is a fixed distance between each pair of pins and the corresponding pair of seats. The elastic element is entirely encased into an appropriate casing, which has an upper and a lower winglet protruding therefrom and drilled with coaxial apertures. The winglets are extended towards the frame, crossing associate edges provided on the support. An additional pivot is mounted onto the support and is extended through the apertures of the winglets as well as through an aperture, coaxial to the previous, which is provided on the support.

## Description

The present invention relates to eyeglasses having, the temples of which are kept in a stable open, respectively closed position by means of elastic devices in such a way that the temples are permitted to elastically spread out beyond the open position.

Various devices for the elastic control of the eyeglasses temples are known, the features of which are herebelow briefly recalled to permit a better understanding of the present invention and an appreciation of its advantages.

All of the known devices have a common functionality, enabling two separate elastic actions. Through the first action thereof, the temples - or, more precisely, the arms that are a main component of the temples - are firmly kept either fully open or fully closed, depending on their instant position. Through the second action, the temples are permitted to spread out beyond the open position so as to better fit to the shape of a head and to permit the eyeglasses to be more easily put on and pulled out.

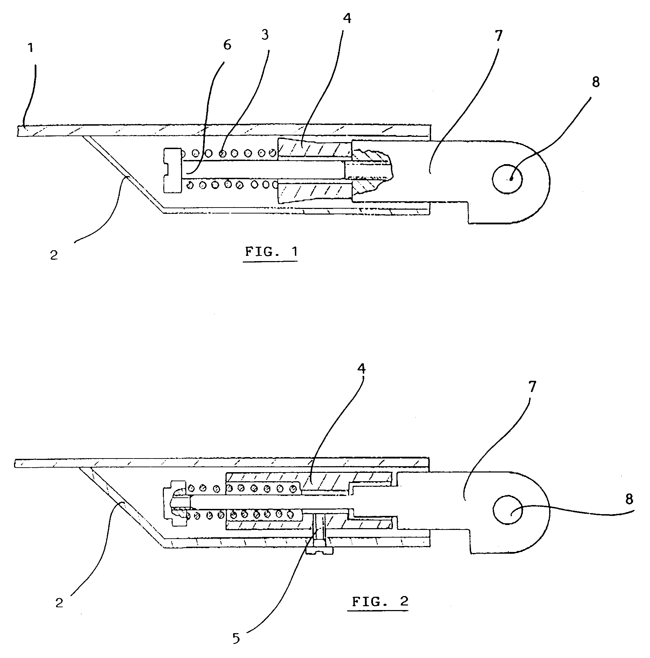

The pivoting devices, linking the temples and the frame of the eyeglasses can, for practical purposes, be subdivided into two types both of them with the above referred functionality. Such types are depicted in fig. 1, respectively fig. 2 so as to be adequately compared to the present invention.

The eyeglasses shown in fig. 1 comprise a temple bar 1, a casing 2 to enclose a pivoting device, a spring 3 to cause the two elastic actions as above described, a bushing 4 to secure an end of the spring, a screw 6 to secure the opposite end of the same spring, a first pivoting element 7 with an aperture 8 for the engagement of a pin (not shown), said pin and a second pivoting element (also not shown ) provided on the eyeglasses frame realizing a hinge to permits a temple to be turned with respect to the frame.

In fig. 2 a screw 5 is also shown to keep fixed the bushing 4, said screw 5 being arranged transversally from the outside of the casing 2.

The assembly and the functionality of the said devices are well known to those skilled in the art, therefore a more detailed description is not needed, in any case, both types of pivoting devices have the following drawbacks.

A first drawback is the necessity of an assembly process in two steps, namely realizing a pre-assembly of the first pivoting element 7, the bushing 4, the spring 3 and the screw 6 and subsequently inserting the pre-assembly into the casing 2.

A second drawback is that such a pivoting device is much too long to be mounted onto a support purposely provided on the frame and has to be mounted onto the temple arm. This circumstance limits a designer choice of the shapes and cross sections of a temple. More particularly, it is impossible to realize an extremely thin temple, preferably a filiform temple, as it would be desirable, since the arm 1 has to be sufficiently big to be firmly and securely joined to the casing 2.

Other pivoting devices are known, with no utilization of screws and bushings, to provide an elastic control of the arms, the manufacturing process of which is particularly severe due to the high precision required. These devices are not involved by the present invention.

It would consequently be desirable, and this is a main object of the present invention, to realize a pivoting device that is not affected by the above referred drawbacks and is simple, reliable, low cost and apted to be produced by means of currently available materials and technologies.

In order to enhance the inherent advantages of the invention, in the following a number of preferred though not limiting, embodiments will be described in detail with reference to the accompanying drawings wherein :
- figs. 3a and 3b are a vertical, respectively an horizontal view of a first device according to the present invention;
- fig. 4 is a simplified plan view of a pair of eyeglasses according to the present invention;
- fig. 5 is a perspective view of a detail of the said eyeglasses;
- figs. 6a and 6b are a top view, respectively a vertical cross section view of the same detail;
- fig. 7 shows an example of the mounting this detail in a first position of stable equilibrium;
- fig. 8 shows the same detail in a position of unstable equilibrium;
- fig. 9 is a plan view showing two different positions of stable equilibrium of the same detail;
- fig. 10 is an ameliorated elastic element according to the present invention;

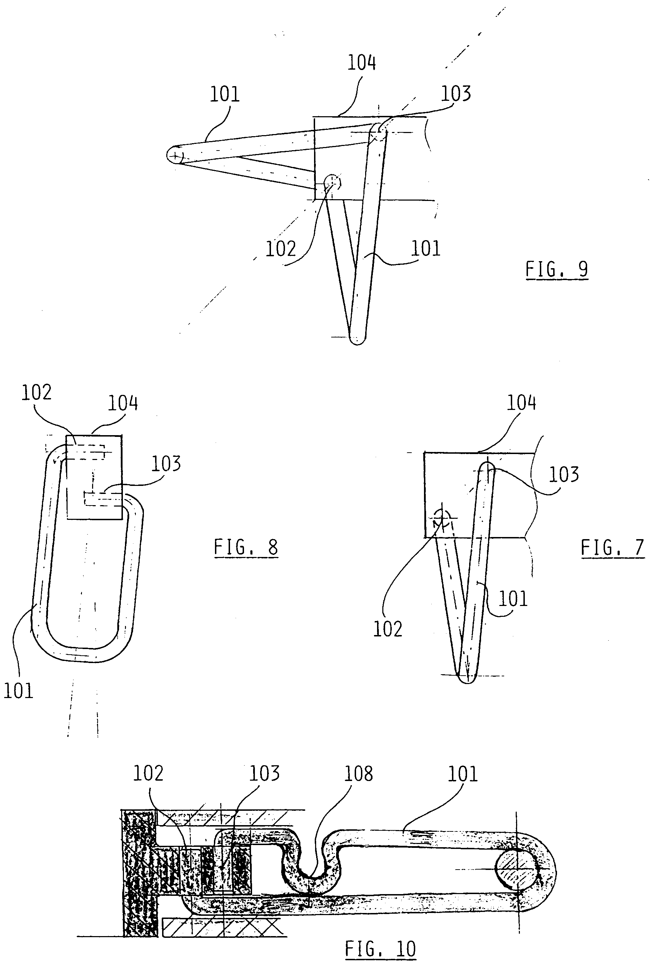

- figs. 10 through 17 are an additional number of variants of the invention;

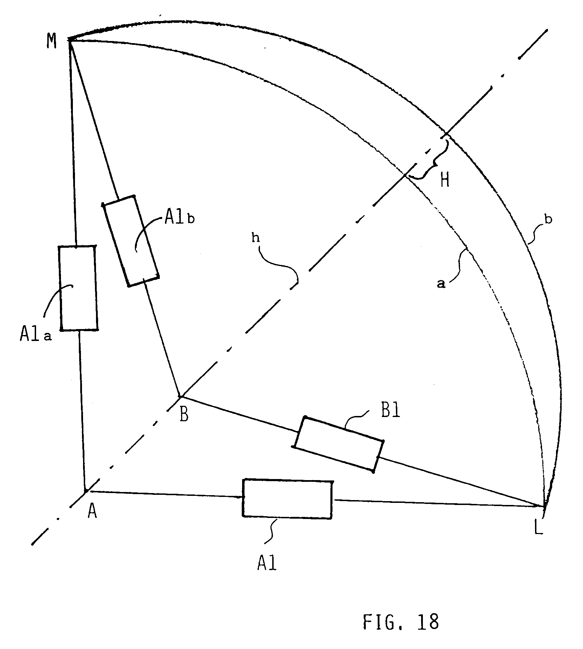

- fig. 18 is a diagrammatic view of a still ameliorated variant of the present invention;

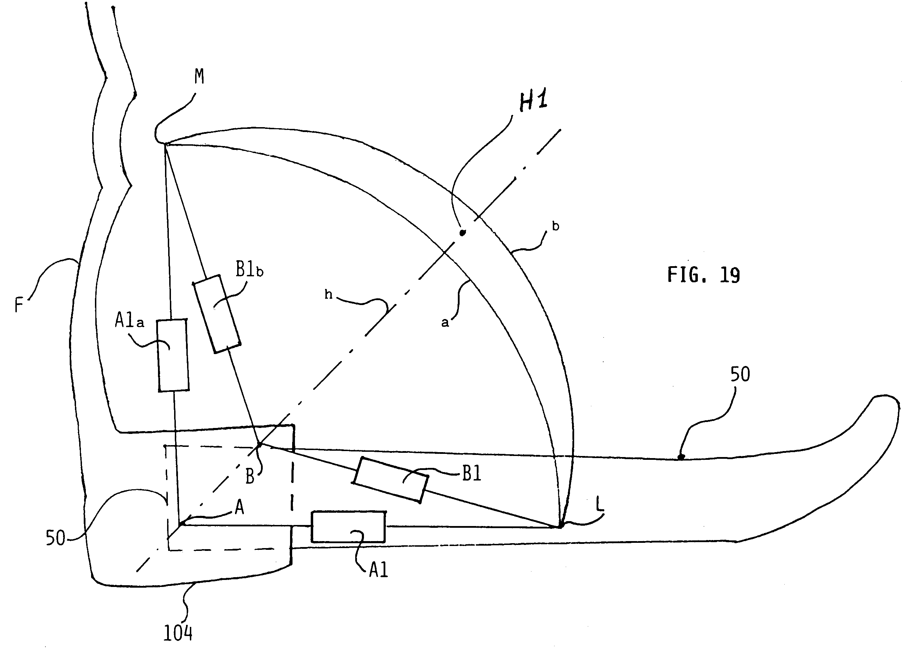

- fig. 19 is the diagrammatic view of fig. 18, as applied onto a pair of eyeglasses;

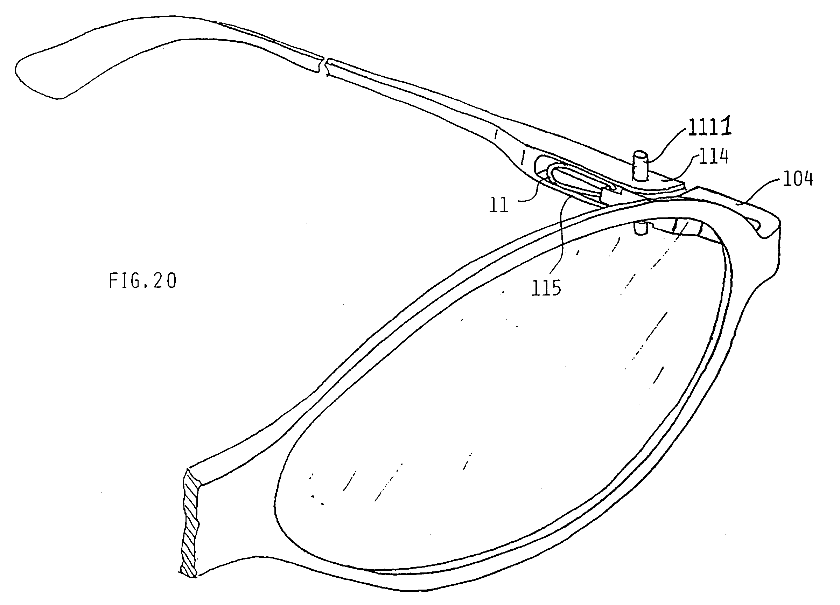

- fig. 20 is a partial perspective view of the eyeglasses according to the said still ameliorated variant;

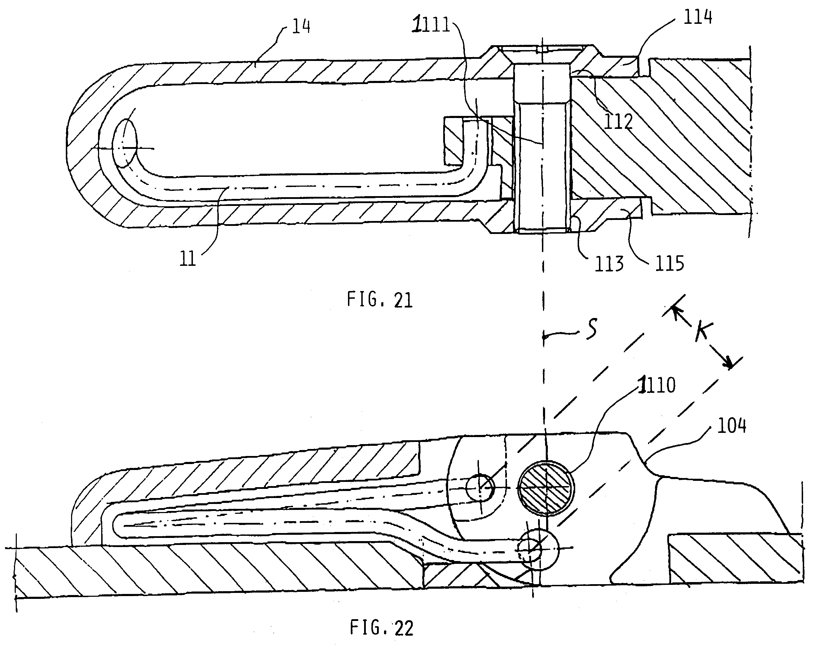

- fig. 21 is a vertical cross section view along the longitudinal midline of a pivoting device of a pair of eyeglasses according to the present invention;
- fig. 22 is a plan view of the device shown in fig. 21;

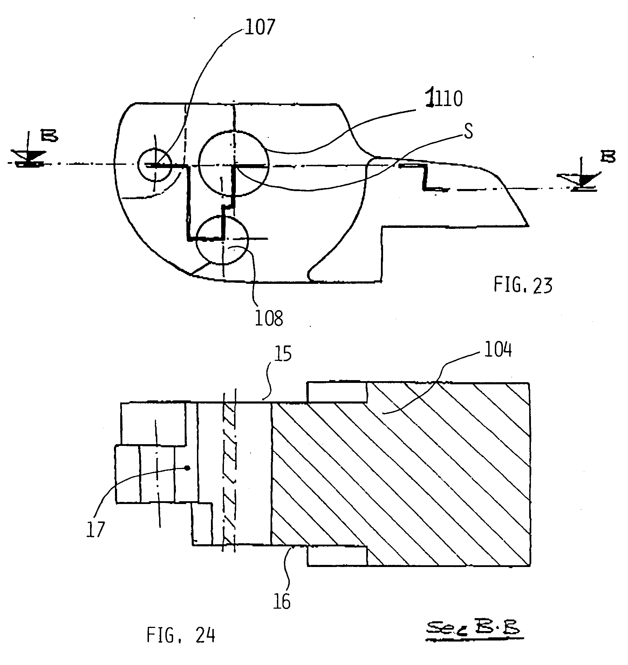

- fig. 24 is a cross section view along the vertical line B-B of fig. 23;

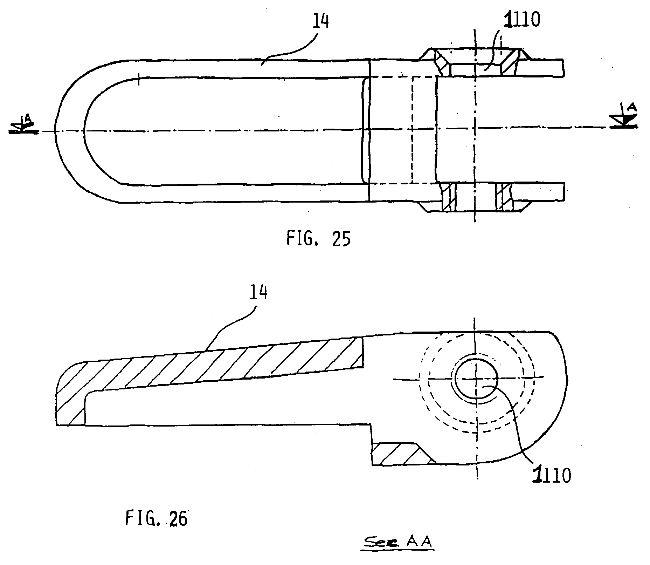

- fig. 25 is a view of only the box-like element shown in fig. 21;

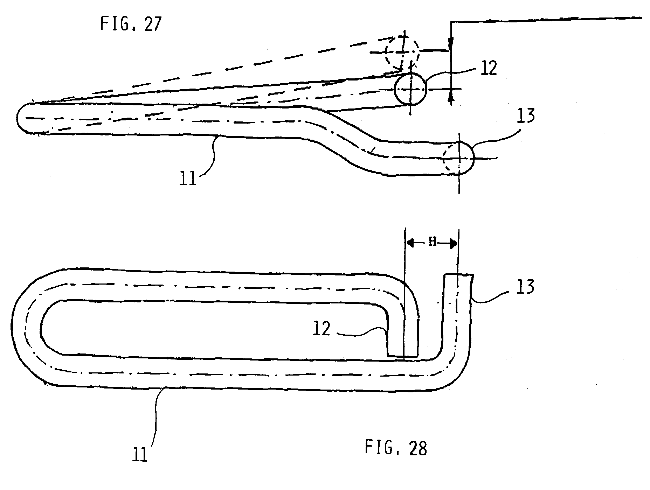

- fig. 26 is a cross section view along the line A-A of fig. 25;
- figs. 27 and 28 are a plan view, respectively a front view of the elastic element shown in figs. 21 and 22;

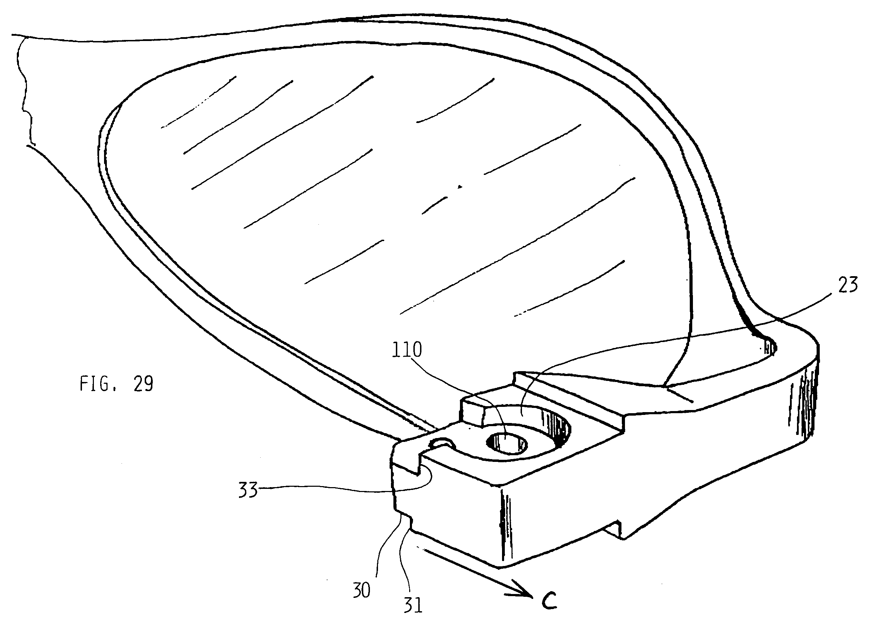

- fig. 29 is a perspective view from the outside, with the pivoting device removed, of an ameliorated eyeglasses frame according to the present invention;

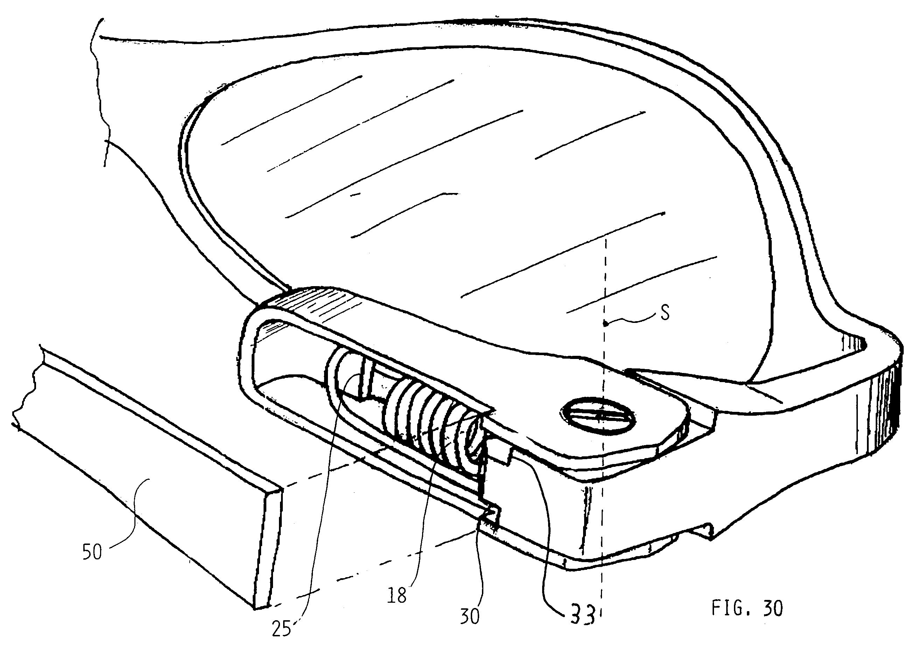

- fig. 30 is a similar view to fig. 29 but with a properly mounted pivoting device;

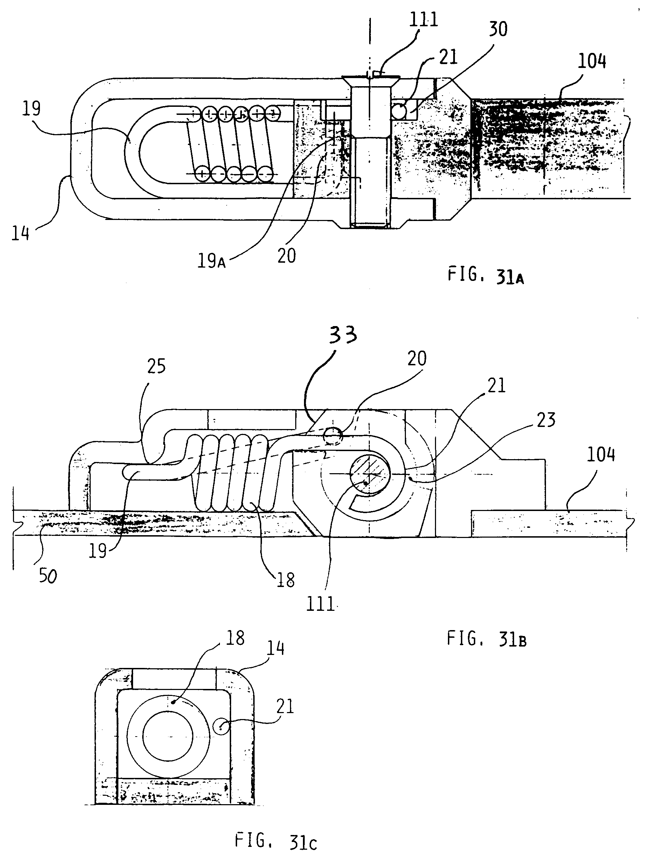

- figs. 31a, 31b and 31c are three orthogonal views of the pivoting device shown in fig. 30;

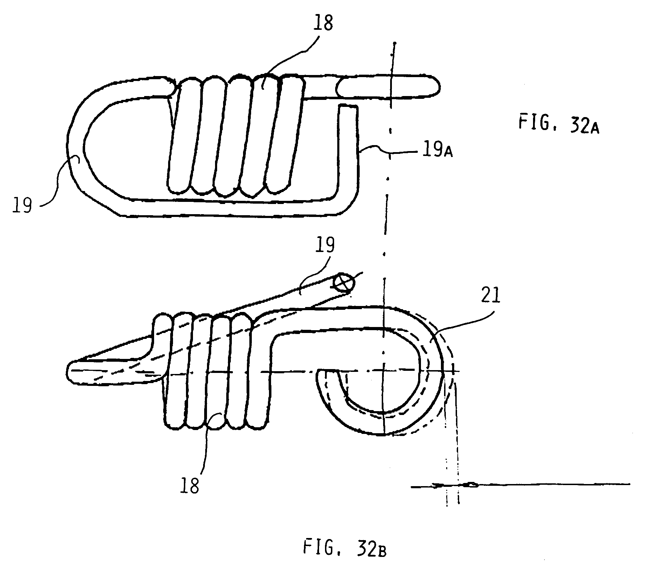

- figs. 32a and 32b are two orthogonal views of the same detail;

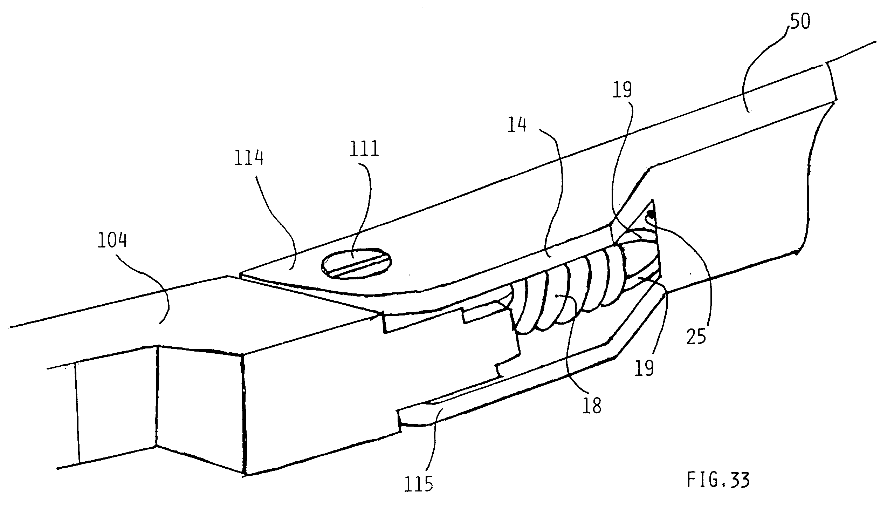

- fig. 33 is a perspective view from the inside of the same detail.

For sake of simplicity, in the following description the word "arm" will also be used to designate an entire temple of the eyeglasses without impairing the clearness of exposition, considering the context where the term is used, as those skilled in the art will easily realize. For the same purpose, the term "support" will be used to designate whatsoever element of an eyeglasses frame, positioned at an outer side of a lens holding portion, apted to be joined to a temple by any suitable means. Furthermore, the definitions "upper" and "lower" will obviously be referred to when the eyeglasses are normally put on and used while the definitions "front" and "rear", or the like,will refer to the direction of the sight through the lense, when referred to constructive detailsof the eyeglasses.

Summing up, the present invention consists in the elimination of the above mentioned pivoting device comprising a spring 3, a bushing 4, a screw 6 to fasten the spring and other auxiliary parts, as well as in the elimination of the two pivoting elements.

A single elastic element 101, having a couple of pins 102, 103 spaced at a distance h from one another, replaces a whole device, as currently used for the purpose of permitting the arms to be turned with respect to a frame, ensuring the arms to take a stable open, respectively closed position, ensuring the same to elastically return to a stable position after being when spread out beyond the open position.

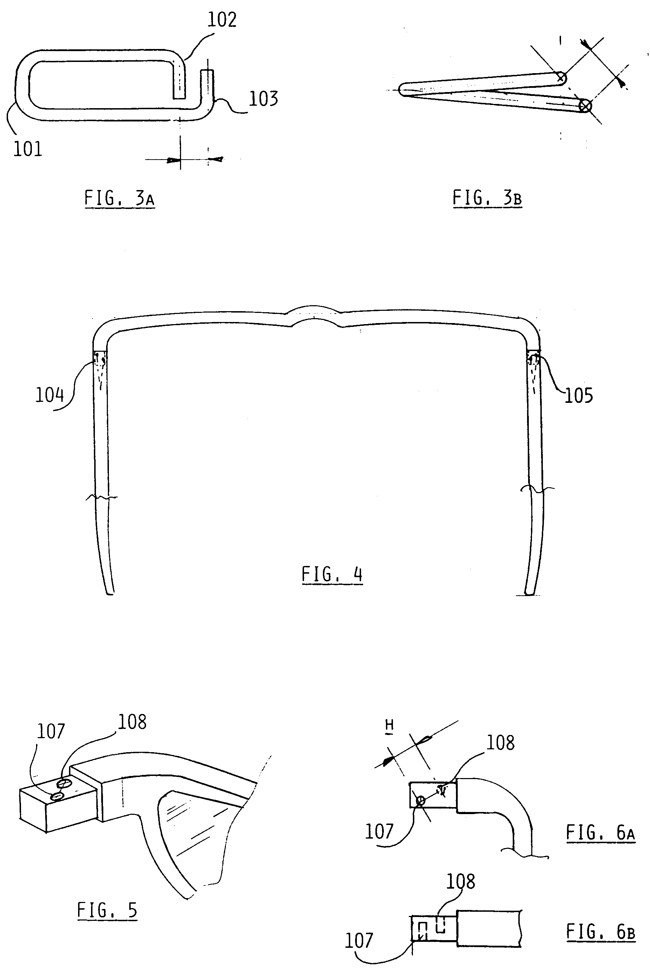

The eyeglasseses frame has a support 104, respectively 105 at each side, in a symmetric layout, see fig. 4, each of the supports being provided with a couple of parallel apertures 107 and 108, see fig. 5. The apertures are extended from opposite sides of each support, precisely from the upper, respectively lower side thereof, parallel to the pivoting axis of the relevant arm, see figs. 6a and 6b. The spacing H between the centerlines of each couple of apertures 107, 108 has the same value as the spacing h between the pins 102, 103 of the associated elastic element, said pins being apt to be elastically spread from one another until they can be inserted into the respective apertures. As a result, the above mentioned elastic element 101 is firmly retained by the opposed apertures 107, 108 of the support, see figs. 7 through 9.

As it will be better clarified hereinafter, it is possible to set the whole elastic element 101 at both sides of the plane passing through the axis of a couple of apertures 107, 108 even if the elastic elements could be designed with such a complex shape that it would not be possible to clearly recognize the interface of the elastic element with the supporting structure, for example a casing or even the temple itself, as it will be apparent from some variants of the invention to be described herebelow.

The outcome of the layout and mounting of the described components has the following effect. When the elastic element 101 is set at one side of the plane passing through the axis of the apertures 107, 108 in the corresponding support 104, since its pins 102, 103 are inserted into the said apertures, the elastic element 101 is in a stable position since it is not subject to rotary forces, the possible reactions to the spread out of the pins having no rotary effect on the elastic element itself, see fig. 7.

On the contrary, when the elastic element 101 is caused to turn so as to approach the plane of the respective apertures, the compressive force due to the arm supporting a first pin and the opposite tensile force due to the arm supporting the second pin have the effect of flexurally stressing and straining the elastic element itself, so this is forced to bend either upwards or downwards, see fig. 8. A reaction is by consequence generated that tends to force the elastic element back to a stable position (as it is well known from the mechanics, every body tends to assume a position of equilibrium characterized by the lowest potential energy). After all, the elastic element 101 tends to assume immediately a layout substantially transversal to the support 104 at one side of the plane through the axis of the apertures for the pins 102, 103.

The described effect is the same for each of the two positions, symmetrical with respect to the plane through the axis of the apertures, that the elastic element 101 can assume. It is therefore possible to check that an elastic element is forced back to a first stable position, when displaced therefrom, until the resultant of the acting forces is directed towards the said first position. On the contrary, when the resultant of the acting forces, after being gone down to zero, changes its direction, the elastic element is forced to assume a second stable position, see fig. 9. In any case, the principles are well known of a bistable spring and have been mentioned here only for a better understanding.

This phenomenon, and its effects, can be exploited as it will now be explained. When, as hereinabove described, an eyeglass temple is firmly secured to an associate elastic element mounted on a support and said support has a proper layout with respect to the frame and to its couple of apertures, it is geometrically possible to obtain that the temple is forced towards any of two separate positions of equilibrium with respect to the associate support.

Additionally, the said stable positions can be chosen in such a way to be spaced fron one another about 90° (that is corresponding to a closed, respectively an open position of the temple) thanks to a proper choice of layouts and dimensional ratios, easily defined by any skilled in the art. The flexibility of the elastic element makes also possible to spread out the temple beyond the stable open position, much the same as in the conventional eyeglasses, by simply exerting a small force on the temple.

A convenient amelioration of an elastic element of the described type consists in the provision of a loop 108 on one arm of the elastic element 101, the loop acting like an elastic bumper that increases the flexibility of the elastic element more flexible (in this way, the decreased resistant forces avoid any risk of failure) and makes easier the action to move the temple from a first (closed) position to a second (open) position of static equilibrium, with a position of unstable equilibrium in between, see fig. 10.

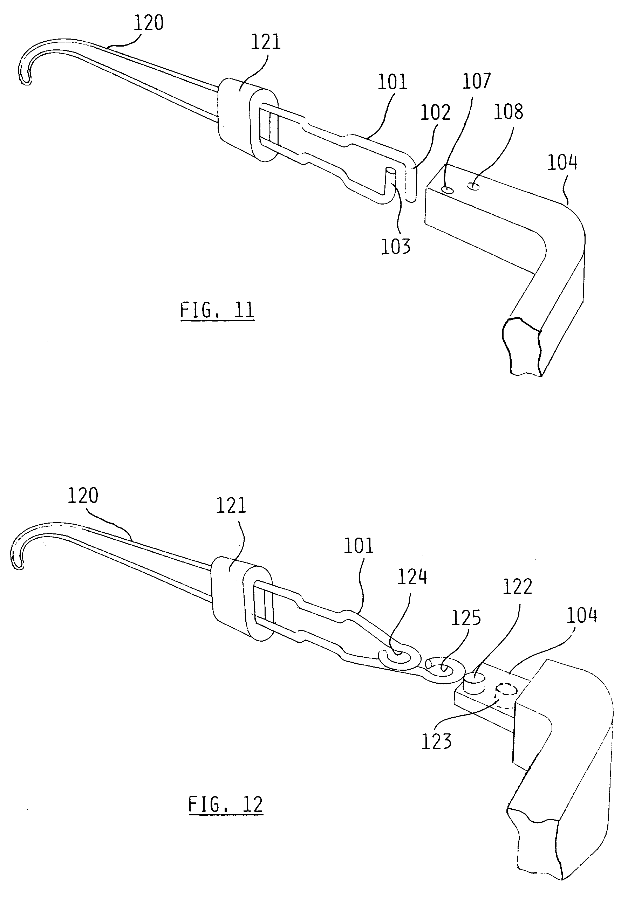

The present invention can be implemented in several shapes, variants and ameliorations, depending on the specific goals to reach. In figs. 11 through 17 only a number of the possible embodiments are showed, which will be immediately understood by any skilled in the art in consideration of the above given inventive principles For a better comprehension, their most relevant features of the said embodiments will now be shortly described.

The two variants shown in figs. 11 and 12 have in common the fact that an elastic element 101 is extended rearwards in such a way to form a temple 120 of the eyeglasses. A clip 121 keeps the two branches of the temple 120 jointly secured to avoid that, if the branches are casually loosened fom one another, it becomes impossible to insert the pins 102, 103 again into the associate apertures 107,108 of the support 104.

The term "apertures" will somewhere be replaced,here and there in the following description and claims, by the term "seats", which is more suitable to the disclosed embodiments.

In the variant shown in fig. 12, the positioning of the associate parts has been exchanged, so two eyelet-shaped seats 124 and 125 are provided on the elastic element 101 and cooperate with a couple of pins 122 and 123 provided on the support 104.

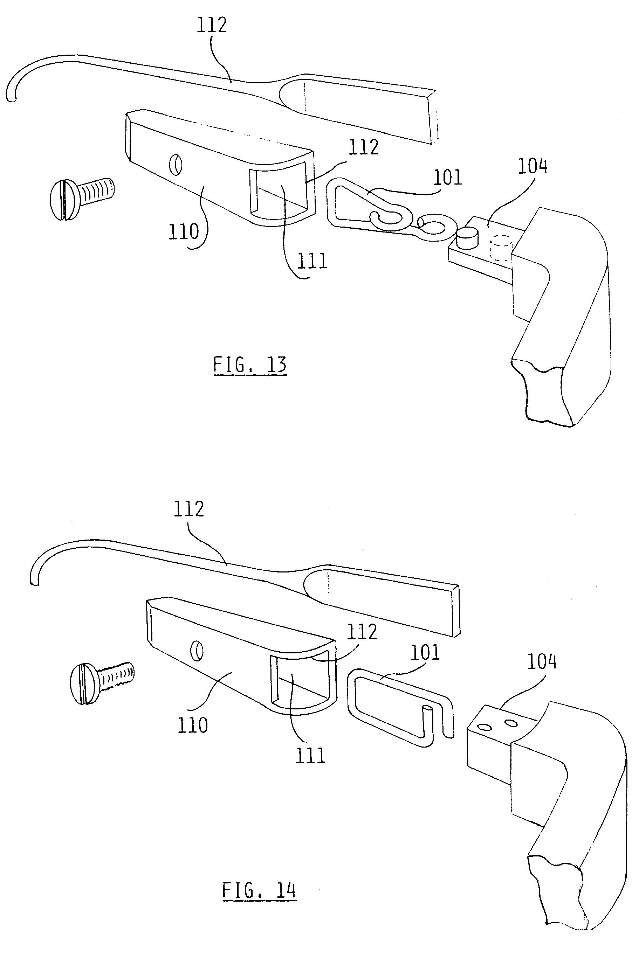

Whenever, due to various manufacturing, functional and stylistic reasons - the elastic element has to be differentiated from the temple, it cannot be completely fastened to the arm since it would then be impossible to strain an elastic element on a vertical plane (as referred to eyeglasses put on with their lenses focused onto an horizontal plane) without a resulting localized deformation of the temple, that would easily be broken in consideration of the substantial rigidity of the material used. Such a problem is solved by encasing a major portion of the elastic element 101 into a recess 111 provided on a casing 110, the recess limiting the stress of the elastic element. The casing 110 is secured to the temple 112 in any known manner and is provided, on its side facing the support 104, with an aperture for the upper and lower portions of the elastic element 101, see figs. 13 and 14 (these figures differ from the previous figs. 11 and 12 only in the type of the elastic element pins and seats).

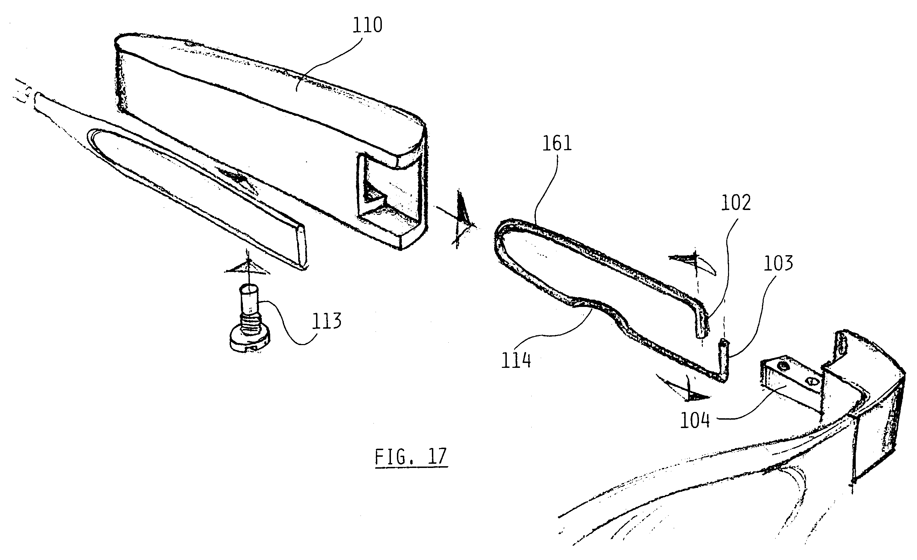

In order to prevent that an elastic element *161* shake abnormally in its seats or even slip off therefrom, a screw 113 is advantageously used, which is protruding from the casing 110 and apt to be engaged on an indented portion 114 of the elastic element, see fig. 17.

To enable an even easier manufacture of the eyeglasses, the mentioned casings can be made integrally with the temples with any known technique suitable to the materials used.

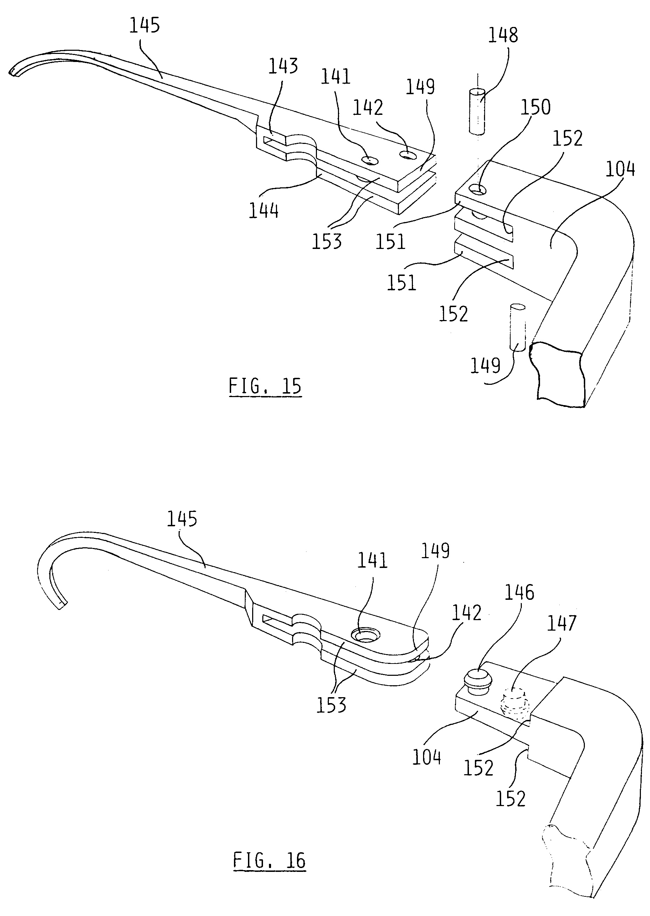

As shown in figs. 15 and 16, the seats 141, 142 can be provided on a plurality of superimposed parallel winglets 143, 144, integrally made with the temple 145, and are protruding therefrom, see figs. 15 and 16. The pins are either integrally formed with the associated support 104, as indicated by reference numerals 146, 147 in fig. 16 or consist of studs 148 suitable to be inserted also into seats 150, provided on associate winglets 151 provided on the support 104, as showed in fig. 15 When assembled, the winglets 143, 144 at the body 145 of the bar and the winglets 151 at the support 104 are mutually secured. In the variants shown in figs. 15 and 16, the bar 145 and the support 104 are directly made with an elastic material, so they directly act like an elastic element, the stability of the open, respectively closed position of the temple 145 being ensured by a proper matching of the front surfaces 149 and lateral surfaces 153 of the winglets with the flat portions 152 of the support 104.

Even if the above described variants of the invention are quite efficient and considerably less complex than the pivoting devices of the current state of art, it was ascertained that, when a temple is spread out, the elastic element as above described is subject to be bent, either upwards or downwards, depending on the chosen physical configuration. Such a bending is due to the forced twist of the mentioned horizontal arms of the elastic element with respect to the pins, since the latter are inserted into a couple of parallel offset seats. As a consequence, a first arm thereof tends to be elongated and the second arm to be shortened, because of the vertical side of the flexible element linking the arms. The said deformations do not actually take place, due to the tensile and compressive resistance of the material but the resultant force causes the elastic element to be bent upwards or downwards, as already mentioned hereinabove. As a consequence of the bending, also the temples are subject to an undesired and irregular deflection, either upwards or downwards, enhanced by the intrinsic flexibility of the arms, so that the user has a bad feeling generated by the mechanical weakness of the pivoting system.

An original solution to this problem was found and will now be described, starting with an explanation of a diagrammatic scheme, as shown in fig. 18. Let's assume a mechanical system consisting of a couple of elastic elements A1, B1, arranged angularly to one another, with a first fixed end represented by point A, respectively B, so as to define a straight line h, and a second common end at point L Let's also assume that fig. 18 shows the elastic elements in a layout of minimum potential energy (stable equilibrium). When the common end of the elements A1, B1 is caused to turn in an anti-clockwise direction around the point A, respectively B (onto the plane of the drawing) and at a constant radius, it moves along two separate arcs, a respectively b. The arcs a, b have in common, in addition to point L, the point M symmetrical to L with respect to the said straight line h. It is clear from the previous that also the configuration of the mechanical system defined by the points A, B as well as by the point M corresponds to a layout wherein the elastic elements, now represented as A1a, respectively B1b, have a minimum potential energy.

In any intermediate configuration between the layouts of minimum potential energy, there is a gap between the arcs a and b, in particular a gap H when both elastic elements are aligned along the straight line h. Therefore, the common point of the two elastic elements would be, along the straight line h, point H1 (in between the two arcs a, respectively b) where the tensile stress by element A1 is perfectly compensated by the compressive of element B1 but which is not a position of stable equilibrium.

As regards fig. 19, it can be seen that it shows a plan view of a portion F of an eyeglasses frame superimposed to the diagrammatic scheme of fig. 18.

The points A, B are positioned on the left side support 104 of the frame F while the temple 50 is secured to a point C, linked to points A and B through elastic elements A1, respectively B1. It is clear that the bar 50 would have only two positions of stable equilibrium, namely at the common points L, M of the arcs a, b but, in absence of a firm pivoting center, the combined deformations of the elastic elements A1, B1 produce an uncertain and waving movement of the temple.

In order to overcome the drawback, a first embodiment will now be described with reference to the figs. 20, 21, 22, 23, 24 wherein the amelioration substantially consists of a single elastic element 11 having two pins 12, 13 spaced apart at a distance H, as shown in figs. 27, 28. On its turn, the eyeglasses frame has a symmetrical support 104 on each side, as shown in fig. 20, a couple of apertures 107, 108 being provided on the support, as shown in fig. 23. Said apertures are provided from opposed sides of the support, namely from the upper respectively lower side of the support, and are extended parallel to the pivoting axis of the temple, as diagrammatically shown in figs. 20, 21, 22. The distance K between the centerlines of a couple of apertures is the same as the distance H between the pins 12, 13 of the elastic element 11. The pins can be elastically spread out to be inserted into the associate apertures, in such a way that the elastic element is firmly retained by the support, as shown in the above referred figures.

A pivoting axis s of a temple around the frame is also defined, due to a pivot fixed to the frame or, more precisely, fixed to a support on the frame, around which a temple is turnable.

To this end, a support 104 is provided with a hole 1110, preferably a through hole, to support a pivot 1111 engageable with a pair of winglets 114, 115 drilled at 1112, respectively 1113 of a casing-like element 14. The above referred elastic element 11 is encased into the said element 14, which is also integrally formed with the associate temple 50, as partially shown in figs. 30, 31b, 33.

In the described manner, such an assembly support-temple is obtained that permits the temple to go into either of two stable positions of equilibrium with respect to the support.

Furthermore, through an appropriate geometry and choice of the dimensional ratios, as well known to any skilled in the art, the above referred positions can be spaced from one another at a right angle, a first position corresponding to a closed temple and the second position to an open temple.

The presence of a fixed pivot 1111 permits a fully controllable movement of the temple around the support 104 of the frame, said movement taking place on a plane, perpendicular to the pivoting axis, betwen the said two positions of stable equilibrium.

It is clear that, in principle, any type of elastical element is suitable for the mentioned purpose, provided that, when associated to the relevant support, it can go into two positions of stable equilibrium, corresponding to an open, respectively, a closed position of the temple, and also provided that the elastical element is fixed to the associated arm with a sufficient strength.

From the given teachings of the invention, many and significative variants can be derived. For example, according to a simplified variant, the two winglets 1114, 1115 have substantially flat and parallel inner surfaces, perpendicular to the axis of the pivot 1111; moreover, to have a more compact construction and improve the overall stiffness of the pivoting system, the inner surfaces of the winglets, when turned around the pivot, can be forced to slide on the associate upper surface 15, respectively lower surface 16 of the portion 17 of the support 104 that is fitted between the said winglets, as shown in fig. 24.

In an even ameliorated variant, the elastic element of the pivoting system is a spiral spring 18, with a substantially horizontal axis, encased into a casing-like element 14 along the associate temple, as shown in figs. 29 through 33.

The farther end 19 of the spiral spring 18 (namely the end more remote from the pivot 1111) is twisted towards the support 104 and bent in such a way that its tip 19a can be inserted into a preferably vertical hole 20 provided on said support, as shown in fig. 31A. The nearer end 21 of the spiral spring 18 (namely the end closer to the pivot 1111) is accomodated in a nearly round recess 23 provided onto the support 104, around the hole 1110 for the pivot 1111 as shown in fig. 29, and is twisted around the pivot at an angle of at least 180°, as shown in fig. 31B and 32B. Such a spiral spring permits a much greater elasticity and a lower force; it also has, under the same stress, a better reliability than a ring-shaped or a filiform spring.

The supplementary advantages, described herebelow with reference to figs. 29, 30, 31a and 31b, are given by a spiral spring. When a support 104 has at its outer end a notch 30 which is sized and arranged in such a way that, when the temple is in its stable open position, the farther end 19 of the spiral spring 18 is inserted into the hole 20, with no interference by the support 104. As shown in the figures, the notch 30 is substantially opposite to the recess 23, where the nearer end 21 of the spiral spring 18 is secured to the support 104. The eyeglasses can consequently be open without no interference between the spring and the support during the aperture.

An additional advantage can be derived from the above. If the front edge 31 of the notch 30 is at a sufficiently forward location (with reference to arrow C shown in fig. 29), the farther end 19 of the spiral spring 18 is in abutment with an inner edge 25 of the casing-like element 14, as shown in figs. 30, 31b, so a temple of an open pair of eyeglasses can be spread out beyond their stable open position, thanks to the elastic reaction of the spring 18. As a matter of fact, since the spring is retained forwards through its ends 19a, 21 and rearwards by the outwadly directed thrust of the abutting edge 25, the spread out of the arm is permitted by the forward location of the front edge 31 of the notch 30, permitting a corresponding elongation of the said end 19.

In any case, the temple cannot be spread out beyond a given angle as its rear edge 135 goes in abutment with an upper edge 136 of a winglet 114 of the casing-like element 14, in a direction opposite to the winglet itself, as shown in fig. 33; thanks to the elastic reaction of the spring 18, the temple is automatically returned to its stable open position.

The possibility to spread out the temples is highly appreciated by the people as it makes easier to put the eyeglasses on and to fit the size and shape of a person's head but such a feature has been until now realized through a much more complex and expensive construction than the present invention.

To avoid an indesiderate loose of the temples at the beginning of their spreading out, it is much advisable the spiral spring 18 is pre-loaded (for example as shown in fig. 32b) at its end 21 twisted around the pin 1111. Such a pre-load, with an appropriate sizing of the recess 23, the pin 1111 and, in general, of the spiral spring 18, avoids any loose or uncertainty of the eyeglasses when the temples are in their open stable position.

With reference to figs. 29, 30, 31b the elastic support 104 is also advantageously provided with a relief 33 to permit the end 21 of the spiral spring 18 to be freely turned around the support 104 while its second end 19 is moving towards one of the stable positions. This explanation of the relief is deemed to be enough for any skilled in the art to define the various details of the eyeglasses for every specific application.

Still another useful variant of the present invention consists in making said casing-like element integrally with the associate temple, which is of simple manufacture, and in the use of a riveted pin or alike as a pivot 111.

The flexibility of the elastic element does also afford the possibility to spread out a temple beyond its stable open position by means of a much lighter outward effort than in the eyeglasses equipped with conventional devices.

## Claims

1. Eyeglasses, for general purposes, comprising a pair of temples to support a lens- carrying frame with associate devices provided with elastic means apt to act as pivoting means with respect to the frame, so as to maintain said arms in a stable open, respectively closed position, and to permit the arms to be elastically spread out beyond the said stable open position, the eyeglasses comprising also a pair of supports (104, 105), symmetrically secured to the frame at the pivoting locations of the associate temples, **characterized in that** :
- said elastic means are integrally made with said pivoting means (101),
- each of said elastic means is apt to be inserted into an associate support (104, 105) through separate links between a pair of pins (102, 103) (122, 123) (146, 147) and the corresponding seats (107, 108) (124, 125) (141, 142), the said pairs of pins and pairs of seats being selectively and alternately provided on the elastic means and/or on the associate supports,
- the pivoting axis of the pins and the associate seats are separate and parallel to one another, the distance h therebetween being substantially constant, in a rest position.

2. Eyeglasses as in claim 1, **characterized in that** :
- the said electric means comprise a single spring-like, filiform element (101, 102), having an elongated profile, open towards the associate supports and having such an angular layout of its longest sides that their most remote ponts (102, 103) are spaced from one another at the said distance h
- each of the elastic means is encased into an associate casing (110), the casings being firmly secured to the associate temples.

3. Eyeglasses as in claim 2, **characterized in that** said casing (110) has a recess (111), open at the side facing the associate support of the frame, to encase at least partially one of the elastic means.

4. Eyeglasses as in claim 3, **characterized in that** said elastic elements are retained in the respective seats, preferably through a screw (113) protruding from the casing and apt to be engaged on an indented portion (114) of the elastic means.

5. Eyeglasses as any of the claims 2 to 4, **characterized in that** at least one longer arm of said elastic means is provided with a loop (108) to have a greater flexibility.

6. Eyeglasses as in claim 1, **characterized in that** each of said elastic means is extended rearwards in such a way to form an associate temple (120).

7. Eyeglasses as in claim 6, **characterized in that** the elastic means are extended rearwards in such a way to form two branches of the temple, the said branches being jointly secured by means of a retaining clip (121).

8. Eyeglasses as in claim 1, **characterized in that**, on each of said supports, the said seats are formed by couples of apertures (141, 142) provided on a plurality of spaced apart winglets (143, 144), made with an elastically deformable material, which are formed by a forward portion of the temple (145).

9. Eyeglasses as in claim 8, **characterized in that**, on each of said supports, the pins are formed by couples of studs (148, 149), apt to be inserted into associate couples of seats (150), provided on edges (151) protruding from the associate support (104) towards the temple.

10. Eyeglasses as in claim 9, **characterized in that** said edges (151), protruding from the support, are made with an elastically deformable material.

11. Eyeglasses as any of the claims 8 to 10, **characterized in that** the front surfaces (149) and lateral surfaces (153) of the winglets (143) are substantially flat and apt to match with corresponding flat portions (152), provided on the support (104) and facing rearwards.

12. Eyeglasses as in the pre-characterizing part of claim 1, wherein each of the pivoting means comprises an elastic element (11), apt to be linked to an associate support (104) through two separate engagements of the ends (12,13) of said elastic element with associate seats (107, 108) provided on said support, the said ends and said seats being selectively and alternately provided on the elastic element and/or on the associate support, **characterized in that** :
- said elastic element (11) is encased into an associate casing-like element (14), secured to the associate temple,
- said elastic element (11) is provided with an upper and a lower winglet (114, resp. 115) that are extended outermost of the forward upper, respectively lower edge of said casing-like element (14) towards the associate support (104), the winglets (114, 115) being drilled with coaxial apertures (112, 113),
- said support (104) has a hole (1110) aligned with the above referred coaxial holes (112, 113), drilled on the winglets (114, 115),
- a fixed pivot (1111) is mounted onto support (104) and is extended through the above mentioned holes (1110, 112, 113).

13. Eyeglasses as in claim 12, **characterized in that** said winglets (114, 115) are substantially flat, parallel to one another andperpendicular to the axis of said fixed pivot (1111), the winglets preferably having their inner surfaces matching the upper, respectively lower surfaces (15, 16) of the portion (17) of the support (104) that is fitted between said winglets.

14. Eyeglasses as in claim 12 or 13, **characterized in that** :
- said elastic element consists of a single filiform element, having the shape of an elongated "U", the opposed ends (12, 13) of which being arranged towards the associate support (104), open, parallel and offset to one another,
- said ends (12, 13) are apt to be inserted into associate seats (107, 108), formed by substantially parallel, opposed holes, spaced apart at a given distance.

15. Eyeglasses as in claim 12 or 13, **characterized in that** :
- said elastic element consist of a spiral spring (18), having a substantially horizontal axis, aligned with the asociate temple,
- a first end (19) of the spiral spring, opposed to said support (104), is bent in such a way that its tip (19a) is inserted into a preferably vertical hole (20), provided on the support, while the second end (21) thereof is apt to be twisted around the fixed pivot (1111) by an angle of at least 180°,
- said spiral spring (18), support (104) and fixed pivot (1111) on each of the temples being so sized and arranged that the temple has the possibility to assume either of two stable positions, corresponding to an open, respectively a dosed temple.

16. Eyeglasses as in claim 15, **characterized in that** :
- each of the supports (104) is provided with a relef (33) at its lowermost outer edge where the said tip (19a) of a first end (19) of the spiral spring (18) is inserted into said hole (20),
. said relief (33) being so sized that it permits the said tip (19a) of the spiral spring (18) to be moved when the associate templeis spread out beyond its stable open position.

17. Eyeglasses as any of the claims 15 or 16, **characterized in that** each of the spiral springs (18) is pre-loaded when mounted so as to be under tension at both of the stable positions of the temple.

18. Eyeglasses as any of the claims 15 to 18, **characterized in that** the vertical plane defined by the axis of the hole (1110) for the fixed pivot (1111) and by the axis of the hole (20), into which the said tip (19a) of the spiral spring (18) is inserted, lies internaly to the angle formed by the temple and the frame, preferably is angled at 45°, when the temple is in the open position.

19. Eyeglasses as any of the claims 15 to 18, **characterized in that** said casing-like element (14) is provided with an inner abutting edge (25), apt to interfere with the rear portion of said end (19) of the spiral spring (18), the spread out movement of the associate temple beyond its stable open position being elastically biased by the reaction of said spring, which is retained forwards through its ends (19a, 21) and rearwards by the outwardly directed thrust of said inner abutting edge (25).

20. Eyeglasses as any of the claims 15 to 19, **characterized in that** the elastic spread out of the temples is restricted by the mechanical interference between a rear edge (135) of the support (104) and a front edge (136) of one of the winglets (114,115).

21. Eyeglasses as any of the claims 12 to 20, **characterized in that** said casing-like elements are integrally made with the associate temple.

22. Eyeglasses as any of the claims 12 to 20, **characterized in that** said fixed pivot (1111) is a riveted pin.
